# EUROPEAN PATENT APPLICATION

(11) **EP 4 834 460 A1**
(43) Date of publication of application: **04.11.2026**
(21) Application number: 25425016.0
(22) Date of filing: 30.04.2025
(51) Int. Cl.: B01D 46/00, B01D 46/02, B01D 46/121

(54) **RIGID POCKET AIR FILTER**

(71) Applicant: F.C.R. Filtrazione Condizionamento Riscaldamento S.p.A., 20092 Cinisello Balsamo (MI) (IT)
(72) Inventor: Cighetti, Andrea, 20092 Cinisello Balsamo (MI) (IT)
(74) Representative: Ferraiolo, Rossana

(57) **Abstract**

Rigid pocket air filter (1) comprising bases (4), transverse elements (7, 8), filter panels (9) arranged to form filter chambers (11), said bases (4) being inclined to give the filter chambers (11) a substantially truncated pyramid shape so that each filter can be partially interpenetrated by an equal filter, the filter being contained in a suitable box (13).

## Description

### Field of the invention

The present invention relates to the field of air filters for general ventilation. Rigid pocket filters are commonly used in both civil and industrial air conditioning/ventilation systems where a compact shape and a large filtering surface are required in relation to the dimensions of the filters themselves.

### State of the art

In the field of air filtration, rigid pocket filters have been used for some time now, said filters comprising a rigid frame, generally made of plastic material, which houses a series of filter panels normally made of glass fiber paper, or synthetic material, which form a plurality of dihedral-shaped filter chambers. The known filters comprise two elements conventionally called bases which are parallel to each other and associated with each other by means of special interlockings, through a series of transverse elements, said bases and said transverse elements being shaped to form the seat of said filter panels to form a plurality of filter chambers, each of which comprising an inlet for air to be filtered and an outlet for filtered air. To the purpose of transport of multiple filters on a pallet, each filter is contained in a suitable box. The dimensions of the rigid pocket filters must meet all the dimensional requirements of the EN 15805:2021 standard regarding "Filters for the removal of particles from ventilation air - Standardized dimensions", while the box containing the filters must preferably meet the requirements set by the ISO 11228:2021 standard for the manual handling of loads.

### Purpose of the invention

The purpose of the present invention is to ensure that the transport volume corresponding to a standard pallet (1200 x 900 x 2000 mm) can accommodate more than 18 rigid pocket filters having standardized dimensions (592 x 592 x 282 mm).

### Basis of the solution idea

The basic idea for achieving the intended purpose is to reduce the number of boxes in which the filters are housed, by increasing to a greater extent the number of filters contained in a single box, with the same occupied volume on a standard pallet.

The above mentioned purpose is achieved by the frame of the filter object of the present invention, which allows a partial interpenetration of several filters between them, such interpenetration being obtained: by tilting the bases of the frame, in such a way that they are not parallel to each other, and by reducing the overall bulk of the ends of the bases on the air outlet side and which is explained in detail with reference to the figures, so that the depth of interpenetration can reach the desired useful level.

The combination of the two above-mentioned characteristics implies that the rigid pocket filter itself is partially interpenetrable with an identical filter.

In order to achieve the intended purpose and overcome the limitations of the state of the art, a plurality of filters according to the present invention are contained in a box that exploits the basic dimensions of the pallets and the volume that can be transported on them, according to the ISO 11228:2021 standard relating to the manual handling of loads.

In order to achieve the above-mentioned purpose, the following study was carried out: the principle was to divide the reference volume of a standard pallet, equal to 1200 x 900 x 2000 mm, into equal parts, so that it is fully exploited and no portions of volume remain unused, by binding two of the dimensions of the box to the front dimension of the filter, the third dimension being bound to one of the dimensions of the pallet. In particular, since the normalized front dimension of the rigid pocket filter is equal to 592 x 592 mm, the front dimension of the box was set to 600 x 600 mm. In this way, by placing two boxes side by side, the long side of a standard pallet is covered, which is equal to 1200 mm. The third dimension of the box, i.e. its depth, was set to 900 mm, corresponding to the short side of a standard pallet.

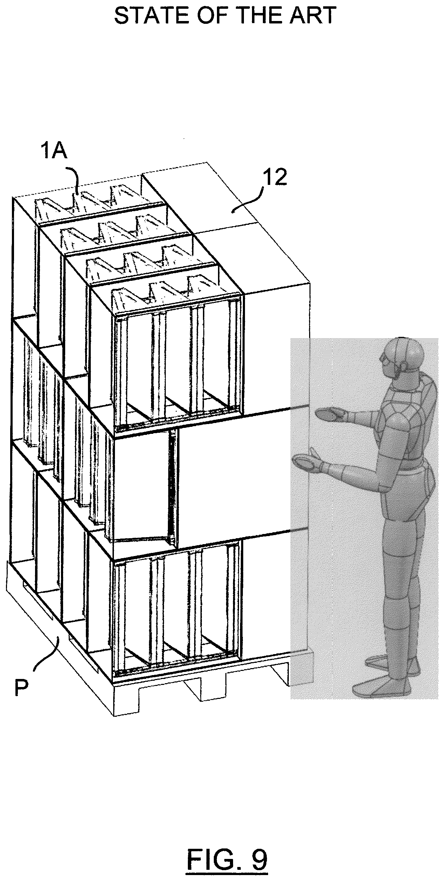

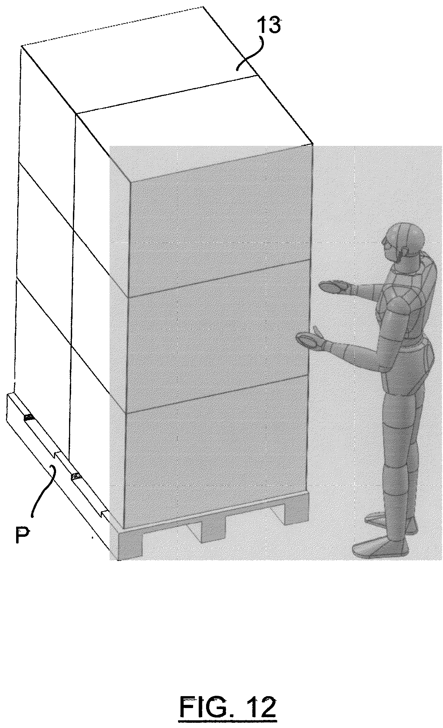

The study described above has allowed to obtain the composition visible in Figure 12 which shows 6 boxes with dimensions 600 x 600 x 900 mm, which boxes completely fill the standard volume, in which each box must contain more than three filters , so that there can be an effective advantage compared to the state of the art, which includes 18 of them (see Figure 9).

The study also allowed to relate the minimum penetration depth to the number of filters contained in each of the above-mentioned boxes in Figure 12, as indicated in Table 1.

**Tab. 1**

| **No. of filters per box** | **4** | **5** | **6** | **7** |
|---|---|---|---|---|
| **minimum interpenetration (mm)** | **76** | **128** | **159** | **180** |
| **n° filters per standard volume** | **24** | **30** | **36** | **42** |

From the above table it can be seen, for example, that in order to accommodate 5 rigid pocket filters with standard dimensions of 592 x 592 x 282 mm in a single box having dimensions of 600 x 600 x 900 mm, a minimum interpenetration of 128 mm is required.

The experimental analysis, carried out with a series of prototypes, highlighted that the inclination of the bases with respect to the horizontal alone is not sufficient to satisfy the minimum interpenetration requirement of Table 1. It was therefore necessary to modify the ends of the frame bases, on the air outlet side, reducing their transverse bulk, this reduction being obtained by rounding the edges at the base-crosspiece interlocking.

In conclusion, the frame of the filter object of the present invention shall therefore have the following characteristics:
- obtain a minimum penetration of 76 mm as per Table 1, otherwise it will not be possible to achieve the goal;
- meet the dimensional requirements of the EN15805:2021 standard;
- limit the compression of the filter panels resulting from the inclination of the bases in order to avoid the deterioration of the energy performance of the filter itself, in particular the resistance to motion (pressure drop);
- prevent penetration from damaging the filter panels or getting the filters stuck together.

On the other hand, it should be taken into account that the boxes in which the filters are housed have also necessarily:
- fully exploit the transport volume corresponding to a standard pallet;
- adequately protect the contents;
- not to exceed the weight limits set by the ISO 11228:2021 standard for the manual handling of loads.

### Advantages of the invention

The solution idea allows to partially interpenetrate multiple rigid pocket filters which allows the following main advantages: to accommodate a greater quantity of filters in the same storage volume, with the consequent reduction of transport costs, and to reduce the quantity of cardboard used for the relative packaging.

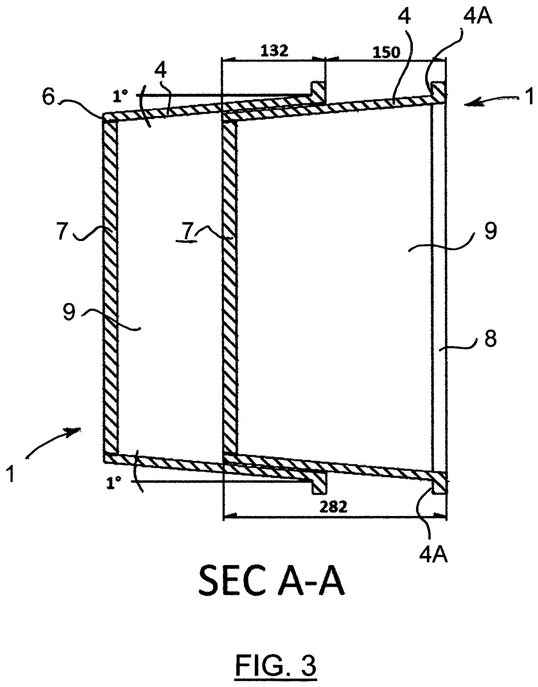

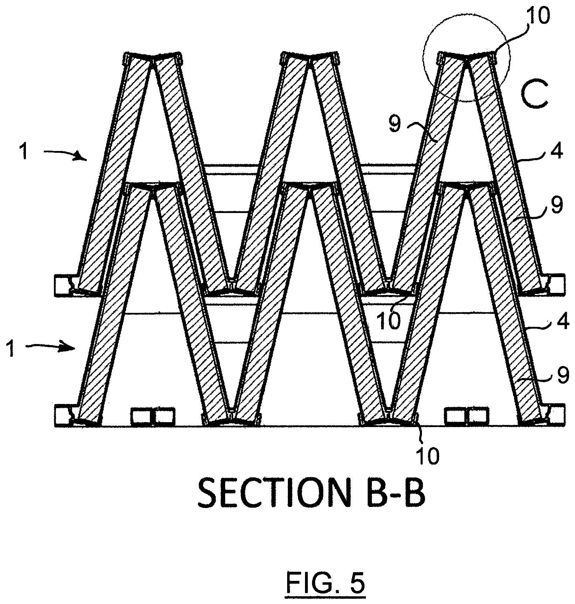

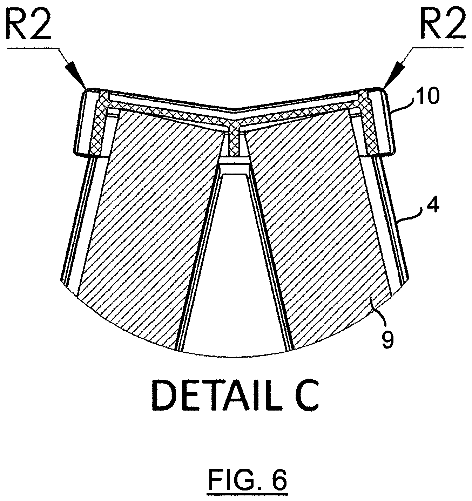

By way of an example only, with reference to rigid pocket filters having front dimensions standardized according to the EN15805:2021 standard of 592 x 592 mm, 490 x 592 mm and 287 x 592, in the prosecution of the description reference will be made only to the front measurement of 592 x 592 mm, similar considerations applying to the other two measurements: 490 x 592 mm and 287 x 592. With a filter of these dimensions which, according to the present invention, provides for an inclination of the bases of 1° with respect to the horizontal and a reduction by radiusing of 2 mm of the transverse bulk of the ends of the bases, at the air outlet side (detail shown with reference to Figures 5 and 6), an interpenetration depth of 132 mm was obtained. Again referring to a filter with standardized dimensions of 592 x 592 x 282 mm, each added and partially interpenetrated filter increases the depth of the whole by 282 mm - 132 mm = 150 mm (Figure 3) according to the following scheme:
- 2 filters - total depth 282 mm + 150 mm = 432 mm
- 3 filters - total depth 282 mm + 150 mm +150 mm = 582 mm
- 4 filters - total depth 282 mm + 150 mm +150 mm +150 mm = 732 mm
- 5 filters - total depth 282mm + 150mm + 150mm + 150mm + 150mm = 882mm.

The inclination of the bases with respect to the horizontal (Figure 3) of only 1° gives rise to a minimal compression of the filter panels which produces an insignificant increase in the resistance to motion, thus satisfying the characteristics listed above so that the filter maintains an effective energy performance. With the filter frame according to the present invention, complying with all the dimensional requirements of the EN 15805:2021 standard and a box having dimensions 600 x 600 x 900 mm which can contain 5 rigid pocket filters, the volume of 1200 x 900 x 2000 mm corresponding to a standard pallet can accommodate exactly six of the aforementioned boxes, for a total of 30 filters instead of 18, that is the 67% more than the state of the art. Since the weight of a single filter with standard dimensions of 592 x 592 x 282 mm is approximately 3.5 kg, this box, which contains 5 of them, meets the requirement of the ISO 11228:2021 standard for manual handling of loads (weight = 5 x 3.5 = 17.5 < 20 kg). This box also has a total surface area of 3.6 m² compared to 1.6 m² of the traditional box, but it contains 5 filters instead of 1. This means that, advantageously, the amount of cardboard used to package a single filter is equal to 3.6/5 = 0.72 m², corresponding to a reduction of 55%.

### Examples of implementation of the invention

The present invention will be described in more detail below with reference to the attached drawings which show an example of embodiment and in which:
- Fig. 1 is a top view of a single rigid pocket filter;
- Fig. 2 is a top view of two partially interpenetrated filters;
- Fig. 3 is a sectional view according to A-A of Figure 2 of two partially interpenetrated filters;
- Fig. 4 is a side view of two partially interpenetrated filters;
- Fig. 5 is a sectional view according to B-B of Figure 4 of two partially interpenetrated filters;
- Fig. 6 is a sectional view of the detail highlighted with C in Figure 5;
- Fig. 7 is an axonometric view of two partially interpenetrated filters;
- Fig. 8 is an exploded view of the rigid pocket filter according to the present invention;
- Fig. 9 is a first overall axonometric view of a pallet comprising the filters according to the state-of-the-art filters;
- Fig. 10 is a second overall axonometric view of a pallet comprising the state-of-the-art filters;
- Fig.11 is a first overall axonometric view of a pallet comprising the filters according to the present invention;
- Fig. 12 is a second overall axonometric view of a pallet comprising the filters according to the present invention.

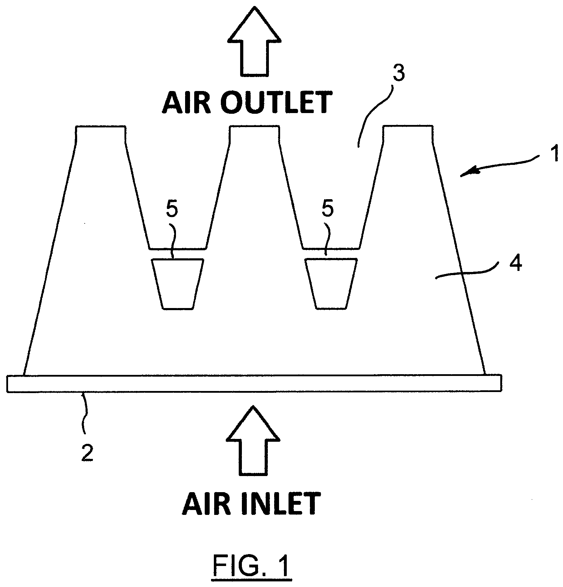

Fig. 1 is a top view of a rigid pocket filter 1 showing the air inlet 2 and outlet 3 from the filter itself. The figure frontally shows a base 4 that comprises retaining elements 5, said elements also acting as a handle to facilitate the handling of the filter itself.

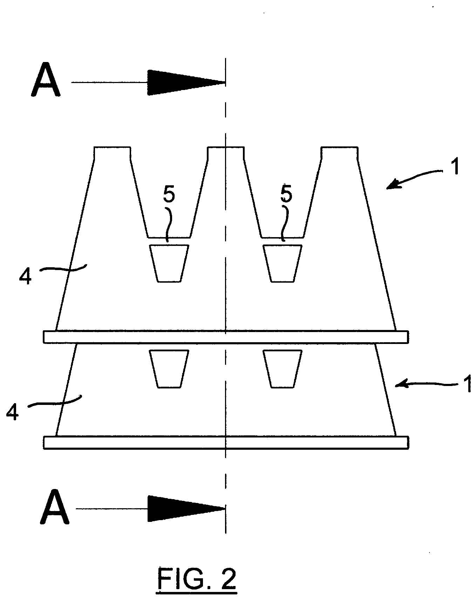

Fig. 2 is a top view of two partially interpenetrated rigid pocket filters 1, the bases 4 and the retaining elements 5 being shown in the figure.

Fig. 3 is a sectional view according to A-A of Figure 2 showing two filters 1, the bases 4 of which have an inclination of 1° to allow, in association with the aforementioned reduction in the overall bulk of the ends 6 of the bases shown in detail in Figures 5 and 6, for them to be partially interpenetrated each other. The figure shows that the bases 4 of each filter are associated with each other by means of the transverse element 7 and the transverse element 8. Furthermore, the figure shows flanges 4A of the bases 4, two filter panels 9 of each filter being contained between said bases 4.

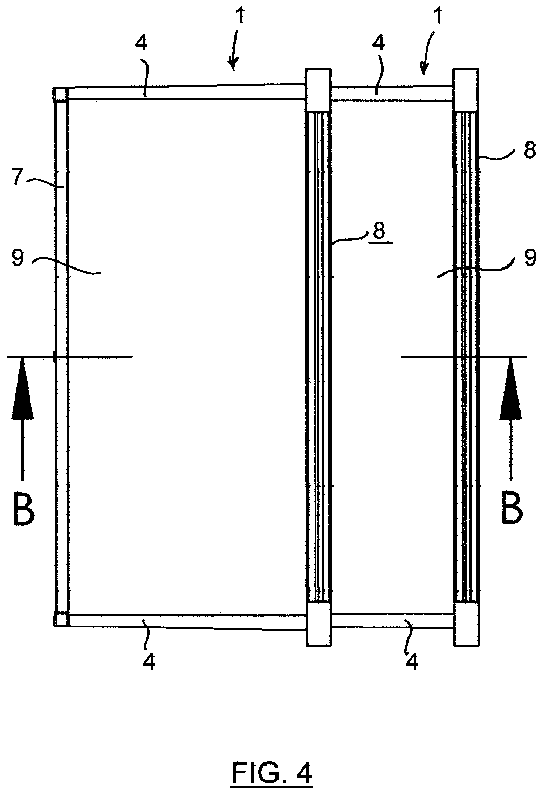

Fig. 4 shows two filters 1 partially interpenetrating each other, the filter panels 9 contained between the bases 4 and the transverse elements 7 and 8 being visible.

Fig. 5 is a sectional view according to B-B of Figure 4 showing two partially interpenetrated rigid pocket filters 1 in which the filter panels 9 are visible. In the figure, interlockings 10 are also visible for the association of the bases 4 with the transverse elements 7 and 8 which are not visible in the figure. One of said interlockings 10 is highlighted in a circle with C, said interlocking being thinned by rounding its ends R2 to obtain the reduction of the bulk of the ends of the bases 4 and to facilitate the interpenetration of the filters 1 between them.

Fig. 6 shows the detail of an interlocking 10 of association of the bases 4 with the transverse elements 7 and 8 not visible in the figure and in which the rounding of the ends R2 is shown which favors the aforementioned interpenetration of the rigid pocket filters 1, and the figure also partially shows the filter panels 9.

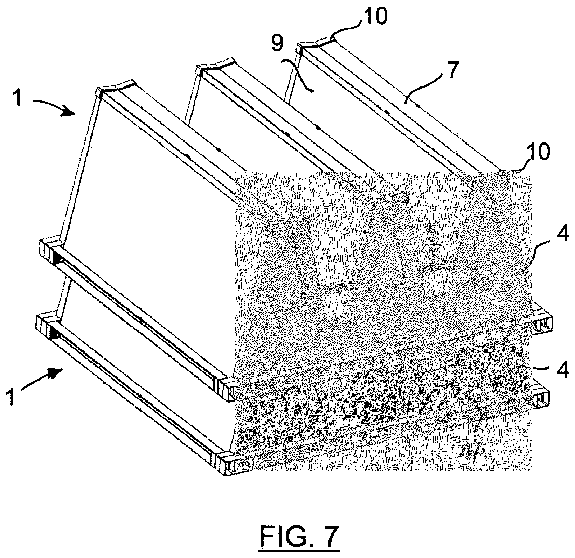

Fig. 7 is an axonometric view of two partially interpenetrated rigid pocket filters 1 showing the bases 4, retaining elements 5, transverse elements 7 and 8, filter panels 9, flange 4A and the interlockings 10 of the transverse elements 7 and 8.

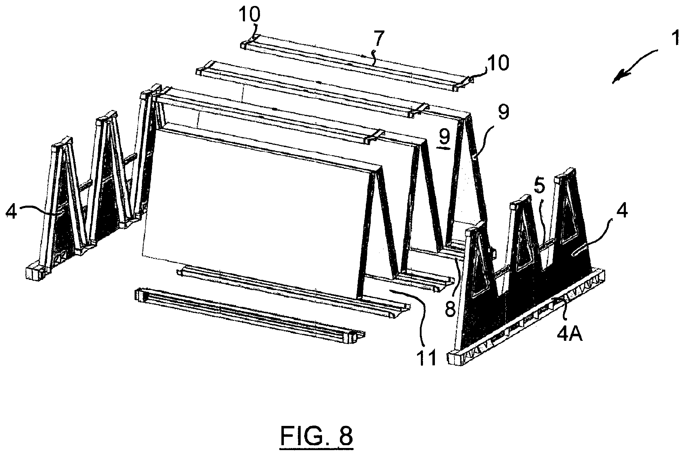

Fig. 8 shows an exploded view of a rigid pocket filter 1 showing the bases 4, the retaining elements 5, the transverse elements 7 and 8, the filter panels 9, the flange 4A and the filter chambers 11.

Fig. 9 is an overall axonometric view of a pallet P containing eighteen boxes 12 on three levels, each box containing a state-of-the-art rigid pocket filter 1A. The figure shows some of the boxes in transparency for the sole purpose of showing the positioning of the filters inside them.

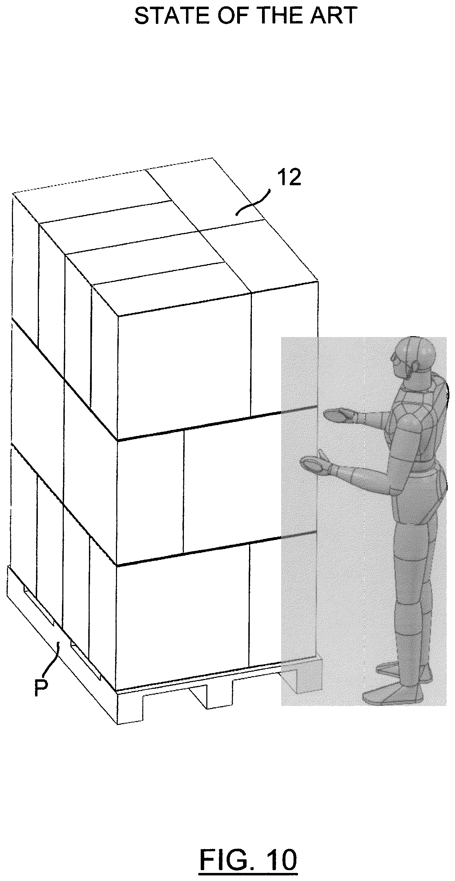

Fig. 10 shows the same overall axonometric view as Figure 9 in which the boxes 12 are not shown in transparency.

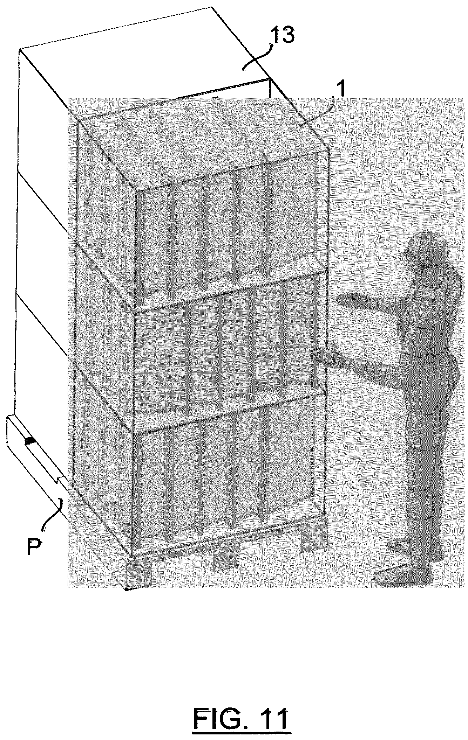

Fig. 11 is an overall axonometric view of a pallet P comprising three level each comprising two boxes 13: the figure shows that each box 13 contains five rigid pocket filters 1 for a total of thirty filters contained in the volume of the pallet according to the present invention. The figure shows some of the boxes in transparency for the sole purpose of showing the positioning of the filters inside them.

Fig. 12 shows the same overall axonometric view as Figure 11 in which the boxes 13 are not shown in transparency.

### Description

The rigid pocket air filter according to the present invention comprises bases 4, transverse elements 7, 8, filter panels 9 arranged to form filter chambers 11, said bases 4 being inclined to give the filter chambers 11 a substantially truncated pyramid shape so that each filter can be partially penetrated by an equal filter, the filter being contained in a suitable box.

The rigid pocket filter according to the present invention has the inclination and width measurements of each interlocking such as to obtain an interpenetration among multiple filters so that each box having dimensions of 600 x 600 x 900 mm can contain five filters, that is to say 30 for standard volume. The filter also comprises, on each base, elements 5 having a triple function: to prevent the interpenetration from damaging the filter panels, to prevent the interpenetrated filters from interlocking with each other, to facilitate the handling of the filter itself.

## Claims

1. Rigid pocket air filter (1) comprising bases (4), transverse elements (7, 8), filter panels (9) arranged to form filter chambers (11) of a substantially truncated pyramid shape so that they can be partially interpenetrated by an identical filter and **characterized in that** said bases (4) have an inclination of between 0.5 and 3 degrees and **in that** the width of each end is reduced by means of an interlocking (10) between the base and the transverse element (7, 8) rounded at its ends (R2) with a radius of between 1 and 5 mm.

2. Rigid pocket air filter (1) as per claim 1 **characterized in that** the inclination of the bases is preferably 1°.

3. Rigid pocket air filter (1) as per claim 1 **characterized in that** the rounding of said ends (R2) of the interlocking (10) preferably has a radius of 2 mm.

4. Rigid pocket air filter (1) as per claim 1 **characterized in that** it is contained, together with a plurality of identical filters (1) interpenetrated with each other, in a box (13) which in association with five other identical boxes (13) allows to fully exploit the basic dimensions of a standard pallet (P) and the transportable volume according to the requirements set out in the ISO 11228:2021 standard for the manual handling of loads.

5. Rigid pocket air filter (1) as per claim 1 **characterized in that** each base (4) comprises retaining elements (5) to limit the interpenetration depth.

## Amended claims

### Amended claims in accordance with Rule 137(2) EPC.

1. Rigid pocket air filter (1) comprising conventional bases of the frame (4), transverse elements (7, 8), which conventionally connect said bases (4) at their ends. filter panels (9) arranged to form filter chambers (11) of a substantially truncated pyramid shape, so that they can be partially interpenetraded by an identical filter, said bases conventionally associated with each other by said transverse elements by means of special joints, to form a single rigid frame, generally made of plastic material, which is shaped to contain a series of filter panels normally made of glass fibre paper, or of synthetic material and which form a plurality of truncated pyramid shaped filter chambers each of which comprises an inlet for the air to be filtered and an outlet for the filtered air, and the filter being **characterized in that** said bases (4) have an inclination of between 0.5 and 3 degrees such that the length of each filter chamber on the side in which the filtered air exits is less than the length of each filter chamber on the side in which the air to be filtered enters, to allow the rigid pocket filter (1) to partially penetrate in an equal filter and **in that** the width of each end of said bases (4) on the air exit side is reduced by means of an interlocking (10) between the base and the transverse element (7, 8) rounded at its ends (R2) with a radius of between 1 and 5 mm.

2. Rigid pocket air filter (1) according to claim 1 **characterized in that** the inclination of the bases (4) is preferably 1°.

3. Rigid pocket air filter (1) according to claim 1 **characterized in that** the rounding of said ends (R2) of the interlocking (10) preferably has a radius of 2 mm.

4. Rigid pocket air filter (1) as per claim 1 **characterized in that** each base (4) comprises retaining elements (5) to limit the interpenetration depth.

5. Arrangement of a plurality of rigid pocket air filters (1) according to claims 1, 2, 3 and 4 **characterized in that** four rigid pocket filters (1) with standard dimensions of 592 x 592 x 282 mm are contained in a box 13 with dimensions of 600 x 600 x 900 mm when the penetration between the filters is 76 mm for a total of 24 filters in the 6 boxes which allow to fully exploit the basic dimensions of a standard P pallet and the transportable volume according to the requirements set out in the ISO 11228:2021 standard for the manual handling of loads.

6. Arrangement of a plurality of rigid pocket air filters (1) according to claims 1, 2, 3 and 4 **characterized in that** five rigid pocket filters (1) of standard dimensions of 592 x 592 x 282 mm are contained in a box 13 of dimensions 600 x 600 x 900 mm when the penetration between the filters is 128 mm for a total of 30 filters in the 6 boxes which allow to fully exploit the basic dimensions of a standard P pallet and the transportable volume according to the requirements set out in the ISO 11228:2021 standard for the manual handling of loads.

7. Arrangement of a plurality of rigid pocket air filters (1) according to claims 1, 2, 3 and 4 **characterized in that** six rigid pocket filters (1) of standard dimensions of 592 x 592 x 282 mm are contained in a box 13 of dimensions 600 x 600 x 900 mm when the penetration between the filters is 159 mm for a total of 36 filters in the 6 boxes which allow to fully exploit the basic dimensions of a standard P pallet and the transportable volume according to the requirements set out in the ISO 11228:2021 standard for the manual handling of loads.

8. Arrangement of a plurality of rigid pocket air filters (1) as claimed in claims 1, 2, 3 and 4 **characterized in that** seven rigid pocket filters (1) of standard dimensions of 592 x 592 x 282 mm are contained in a box 13 of dimensions 600 x 600 x 900 mm when the penetration between the filters is 180 mm for a total of 42 filters in the 6 boxes which allow to fully exploit the basic dimensions of a standard P pallet and the transportable volume according to the requirements set out in the ISO 11228:2021 standard for the manual handling of loads.
